# EUROPEAN PATENT APPLICATION

(11) **EP 4 410 126 A1**
(43) Date of publication of application: **07.08.2024**
(21) Application number: 23218570.2
(22) Date of filing: 20.12.2023
(51) Int. Cl.: A24C 5/34, B65B 19/28, G06T 7/00

(54) **METHOD FOR DETERMINING THE CONFORMITY OF A TYPE OF FILTER BEING PROCESSED IN A MACHINE OF THE TOBACCO INDUSTRY**

(30) Priority: 01.02.2023 IT 202300001617
(71) Applicant: G.D S.p.A., 40133 Bologna (IT)
(72) Inventor: MENGOLI, Fausto, 40133 Bologna (IT); ROMAGNOLI, Massimo, 40133 Bologna (IT)
(74) Representative: Bianciardi, Ezio

(57) **Abstract**

A method for determining the conformity of a type of filter being processed in a machine of the tobacco industry, in particular a combining (100) or filter tip attachment (200) machine, the method comprising the step of transversely feeding a filter segment (S) through the inspection module (10). The inspection module comprises a detector (20) arranged and/or configured in such a way that, while the filter segment (S) is being fed, the detector (20) faces a frontal surface of the filter segment (S). The method further comprises a step of detecting the frontal surface of the filter via the detector (20) and a step of generating, via the detector (20), a signal representative of the structure and/or composition of at least one frontal portion of the filter segment (S). The method further comprises a step of processing the representative signal to obtain an information identifying the conformity of the type of filter.

## Description

It is the object of the present invention a method for determining the conformity of a type of filter being processed in a machine of the tobacco industry, in particular a combining or filter tip attachment machine.

In the production of cigarettes, the types of filters which may be applied are increasingly wide and they may change based on the brand of cigarettes dealt with.

In such situation, the need is particularly felt to check if the type of filter entering the machine perfectly matches the type of filter actually required by the machine to be able to produce the desired type of cigarette.

In particular, such need arises from the fact that, during the production of cigarettes or, more generally, of composite smoking items, it often happens that the filters are fed by filling a collection hopper, for example by emptying boxes. The fed items may, for example, be multiple-length filter sections, intended for cutting and for a possible combination with different type of filter segments (as in combiners). In this situation, it is sometimes complex or impossible to certainly and accurately identify the type of filters which have actually been loaded into the machine. Once contained in the hopper, in fact, they may no longer be visually inspectable, while, during the operation of the machine, the high speeds may impede the visual perception of details sufficient to identify them. Furthermore, especially in the case of composite filters, the easily identifiable components (for example hollow tubes) may only be visible once the cigarette is finished, downstream of the last centerline cut, and, even in this case, the high speeds would still not allow for an effective visual identification.

Therefore, in the event of incorrect loading, the error may only be identified following the production of a batch which should thus be discarded.

To date, devices capable of identifying defects in filters using sensors of the optical type are known. In particular, such devices inspect the filter side end of a cigarette and acquire a signal representative of the structural quality of the filter and compare it with a reference signal so as to identify the possible presence of structural defects.

Devices are also known which allow the identification, for example via optical sensors, of errors present in a multi-segment filter. In particular, such devices are capable of identifying unexpected empty spaces. Disadvantageously, the aforesaid devices of the prior art are capable of identifying possible defects inside the filters but are not capable of identifying the type of filter analyzed.

In other words, the devices of the prior art are configured to determine the quality of the filters but not the type thereof. In such situation, it is therefore not possible, using known devices, to detect whether there is conformity between the type of filters that the machine requires to produce smoking items of a predetermined type and the type of filters actually fed to the machine.

The technical task of the present invention is therefore to provide a method for determining the conformity of a type of filter being processed in a machine of the tobacco industry which is capable of overcoming the drawbacks emerging from the prior art.

It is therefore the object of the present invention to provide a method for determining the conformity of a type of filter being processed in a machine of the tobacco industry which is capable of detecting whether or not the type of filters entering the machine matches the type actually required to obtain the type of smoking items currently being processed in the machine.

It is a further object of the present invention to provide a method for determining the conformity of a type of filter being processed in a machine of the tobacco industry which is capable of establishing the type of filters entering the machine.

The specified technical task and the specified objects are substantially achieved by a method for determining the conformity of a type of filter being processed in a machine of the tobacco industry comprising the technical features set out in one or more of the accompanying claims.

In particular, the specified technical task and the specified objects are achieved by a method for determining the conformity of a type of filter being processed in a machine of the tobacco industry, in particular in a combining or filter tip attachment machine. The method comprises a step of transversely feeding a filter segment through an inspection module. The inspection module comprises a detector arranged and/or configured in such a way that, while the filter segment is being fed, the detector faces a frontal surface of the filter segment. The method further comprises a step of detecting, via the detector, the frontal surface of the filter and a step of generating a signal representative of the structure and/or composition of at least one frontal portion of the filter segment. The method further comprises a step of processing the representative signal to obtain an information identifying the conformity of the type of filter. Such signal, in particular, may be processed to evaluate the conformity with an expected signal or to identify exactly the type of filters currently processed.

Further features and advantages of the present invention will appear clearer from the indicative and therefore non-limiting description of an embodiment of a method for determining the conformity of a type of filter being processed in a machine of the tobacco industry in accordance with the invention.

Such a description is set forth below with reference to the accompanying Figures, provided by way of mere, and thus non-limiting, indication, in which:
- Figure 1 shows a simplified diagram of a filter tip attachment machine suitable for the application of the method according to the invention;
- Figure 2 shows an operating position for detecting a cigarette in accordance with the method according to the invention;
- Figures 3A-3D represent four reading intensity curves obtained during an embodiment of the method according to the invention.

It is the object of the present invention a method for determining the conformity of a type of filter being processed in a machine of the tobacco industry, in particular a filter tip attachment machine 100. Such machine may also be a combining machine (not shown) or a further machine suitable for processing bar-shaped segments intended to form the filter of a smoking item, in particular a machine configured for the transversal advancement of the segments.

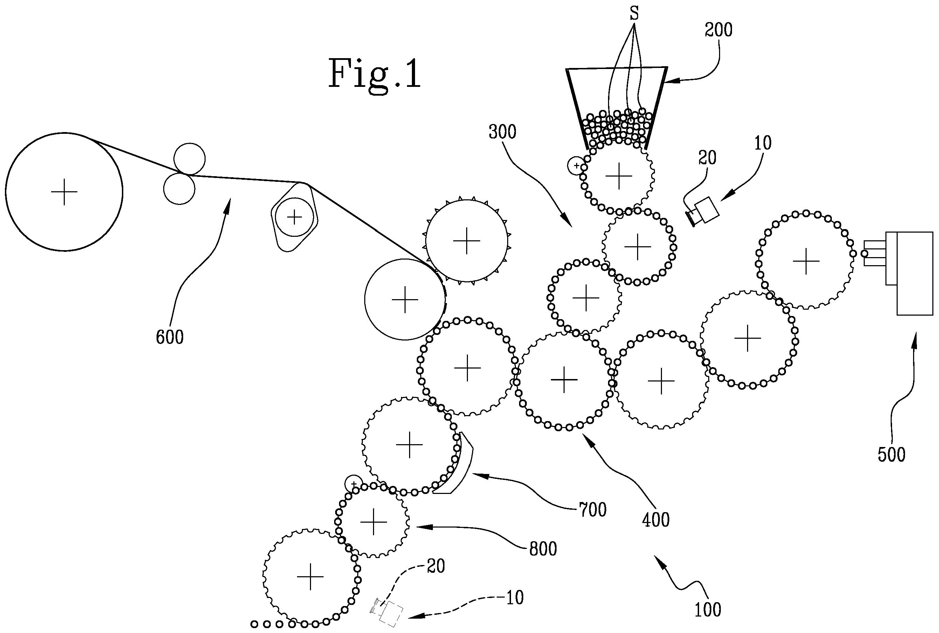

In the filter tip attachment machine 100, a hopper 200 is provided for collecting a plurality of filter segments "S", in particular multiple-length filter segments, a descent line 300 of a known type, in particular to carry out the cutting and subsequent staggering-alignment of the segments (which, at this point, have a single or double length), and a combining drum 400 for combining the segments with tobacco segments coming from a forming line 500. In the solution shown in Figure 1, the segments fed to the combining drum 400 have a double length and receive respective single-length tobacco segments at the ends. Subsequently, the groups thus composed (tobacco - double filter - tobacco) are connected to each other via a band fed by respective band feeding means 600, then rolled on a rolling drum 700 and then cut in the centerline on a cutting drum 800 thus obtaining two adjacent cigarettes of single length.

The method according to the invention is operated by inspecting at least one filter segment "S" (alternatively, a plurality of segments) at at least one end. This is accomplished by transversely feeding a filter segment "S" through an inspection module 10.

Preferably, the step of feeding the filter segment "S" is carried out at a transfer drum of the aforesaid descent line 300 or downstream of the combining drum 400, in the case of the filter tip attachment machine of Figure 1.

Preferably, such step of feeding is carried out by moving, through the inspection module 10, one of: a single-length filter segment "S", a multiple-length filter segment "S" and a filter-tipped cigarette of single length.

In greater detail, during the step of feeding, the filter segment "S" is fed via a drum provided with a succession of peripheral seats oriented perpendicularly to a feeding direction so as to move a succession of filter segments "S" along a feeding path passing through the inspection module 800.

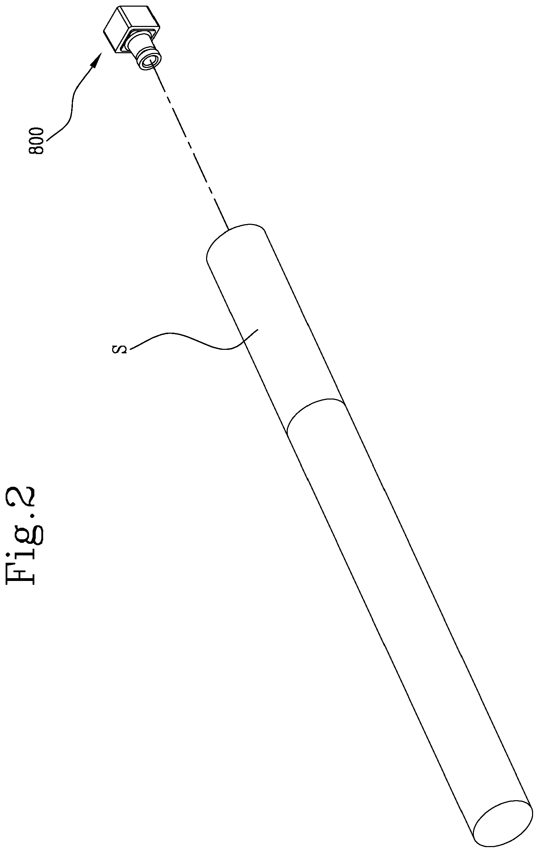

The inspection module 10 comprises a detector 20 arranged and/or configured in such a way that, while the filter segment "S" is being fed, the detector 20 faces a frontal surface of the filter segment "S" itself (Figure 2). For such reason, although in Figure 1 the detector 20 is (for reasons of simplicity) shown facing laterally with respect to the segments "S" on the respective drum, therefore with the detection axis radial to the drum, the detector 20 has a detection axis which is axial or at least partially axial, with reference to the longitudinal axis of the segments "S" (therefore of the respective drum).

In accordance with an aspect of the present description, the detector 20 comprises an optical fiber sensor having a detection axis substantially parallel to the longitudinal axis of the filter. In greater detail, the detector 20 may comprise a single optical fiber sensor, for example centered on the axis of the segment "S", or two or more optical fiber sensors located on the frontal surface of the segment "S". Alternatively, the detector 20 may comprise a camera or another optical device.

Preferably, the detector 20 is stationary, i.e., it keeps the position thereof unchanged with respect to the filter segment "S" which is movable while being fed.

In use, therefore, following the passage of a filter segment "S" through, or in front of the inspection module 10, the detector 20 detects the frontal surface of the filter.

The step of detecting is carried out at a point in the process of assembling the smoking item in which the frontal surface of the filter segment "S" is visible and therefore optically inspectable by a sensor.

In particular, the step of detecting may be carried out during the descent of the filter segments "S" along the descent line 300, therefore between the hopper 200 and the combining drum 400. Since along the descent line the segments "S" are (in accordance with a known technology) cut, transversally staggered and subsequently axially aligned to define a succession of items in sequence, the inspection may occur before the cutting as well as after the cutting. Alternatively, the inspection may occur following the cutting of a double cigarette after the rolling of the double segments and the cutting in the centerline (Figure 1, detector 20 in hidden line). In accordance with a different solution where the rolling is carried out on single filters coupled to single tobacco segments, the inspection may occur downstream of the rolling, in any position suitable for the purpose. After the step of detecting, the method comprises a step in which a representative signal of the structure and/or composition of the at least one frontal portion of the filter segment "S" is generated via the detector 20 and/or via a processing unit connected thereto.

In accordance with the invention, the representative signal comprises a time and/or space curve of the intensity of a reading made by the detector 20.

For example, the representative signal comprises a curve provided with peaks and valleys arranged according to the type of material passing in front of the detector 20 (paper, cardboard, acetate, air, and so on). For example, in the case of an NWA filter, the curve obtainable has a trend in which lateral peaks are recognizable, while, in the case of a solid acetate filter, the obtainable curve has a substantially constant trend due to the presence of only the filter material.

The signal generated by the detector may therefore be defined by a close succession of images, taken at a pre-established frequency, or by light intensity signals or other.

The method further comprises a step of processing the representative signal to obtain an information identifying the conformity of the type of filter.

Preferably, but not by way of limitation, the type of filter identifiable is at least one of the following: an acetate filter wrapped in a covering material; a filter of the NWA type; a filter having at least one hollow, tubular end; an irregularly filled filter (for example, PLA or strip material or crimped sheet); a filter with non-filling insert.

During the step of processing, therefore, the representative signal is analyzed to obtain a response regarding the conformity of the filter type.

In such situation, the step of processing may comprise a sub-step of analyzing the signal to identify the intensity curve (peaks/valleys) and, preferably, identifying a number of peaks or valleys of the curve and/or a sub-step of identifying the width of the peaks or valleys of the curve. Furthermore, or alternatively, the step of processing may comprise a sub-step of identifying the position and/or mutual distance between variations in intensity of the curve and/or a sub-step of identifying an average value and/or a standard deviation of the curve.

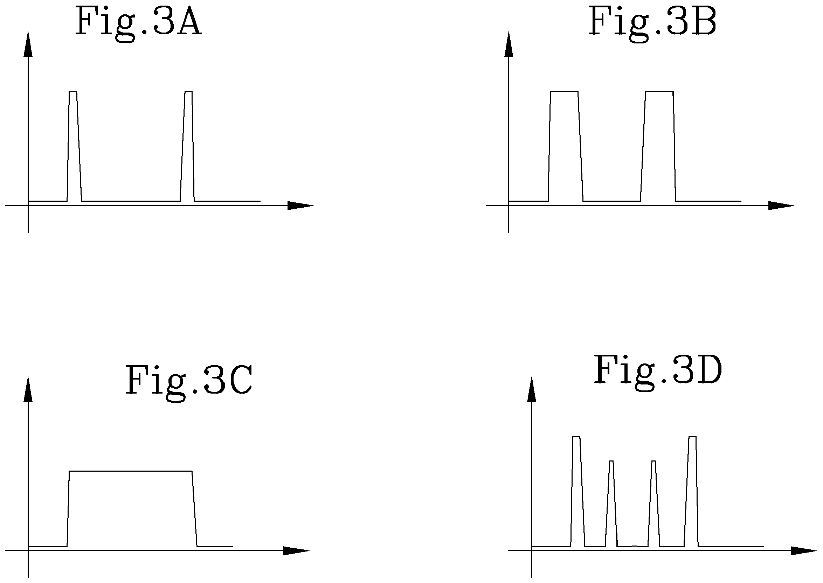

Figure 3A, for example, shows the curve (amplitude-time) of a hollow filter (hollow tube) where the lateral peaks represent the detection of the thin walls (for example, paper walls) given by the single tube. The tube may be obtained, for example, by winding it from a paper sheet or tape. Figure 3B shows the curve of a hollow NWA filter where the peaks represent the detection of the initial and final walls, having a greater thickness with respect to the hollow tubular solution with thin walls of Figure 1. Figure 3C shows the curve of a solid filter, for example an acetate filter, in which the presence of the continuous filtering material creates a uniform pattern throughout the entire thickness. Figure 3D shows the curve of a hollow filter with a non-filling insert, for example an insert with an S-folded sheet, where the two central peaks caused by the detection of the insert may be seen.

The method comprises, after the step of processing the representative signal, a step of verifying that the type of filter derived from such step of processing matches a type of filter expected for the machine process.

In other words, once the representative signal of the filter segment has been derived (i.e., once the trend of the time and/or space curve of the intensity of a reading of the detector 20 has been derived), it is verified that such signal conforms to the one corresponding to the type of filter required.

More in detail, in accordance with a possible embodiment, the step of verifying is carried out by comparing the representative signal of the structure and/or composition of the frontal portion of the filter segment "S" with a reference signal, and in particular with a single reference signal, corresponding to the type of filter required for the current machine process.

In other words, since the reference signal representative of the type of filter required is known, it is possible to make a comparison between such reference signal and the detected signal so as to derive whether the filter segment "S" is compliant or non-compliant.

For example, if the machine currently requires inputting acetate filters wrapped in a covering material to which a reference signal having two peaks corresponds, but a signal without peaks is detected (typical of an NWA filter), the method is capable of detecting that the compatibility between the types of filter is not respected.

Preferably, if the comparison between the representative signal of the type of filter detected and the reference signal, representative of the type of filter required for the machine process, returns a result indicating a difference or a dissimilarity greater than a predefined threshold, the method comprises a step of generating an alert and/or machine stop signal.

On the contrary, if the step of comparing returns a result of total compliance or a difference which is below a pre-established threshold, no alert signal is generated.

In accordance with a possible embodiment, the method may further comprise, following the step of verifying, a step of transmitting a signal to a user. Such signal may be a refusal signal representing a negative result of the step of verifying. In such situation, the type of filter detected by the filter segment "S" analyzed in the inspection module 10 is different from that required for the machine process.

Alternatively, such signal may be an acceptance signal representing a positive result of the step of verifying. In such situation, the type of filter detected is the same as that required for the machine process.

Via the step of comparing, therefore, the type of filter entering the machine is not necessarily identified per se, but it is identified whether this type is compatible or not with the type required by the machine.

For example, if the machine currently requires inputting acetate filters wrapped in a covering material to which a reference signal having two peaks corresponds, and a signal identical or most similar thereto is detected, it is possible to conclude that the entering filter segment "S " is of the acetate type wrapped in covering material. On the contrary, if, for example, a signal with four peaks is detected, it is possible to conclude that the entering filter segment "S" is not of the acetate type wrapped in coating material.

Advantageously, by virtue of the possibility of identifying whether or not there is conformity between the type of filter to which the filter segment "S" belongs and the type required for the machine process, it is possible to reduce the number of waste smoking items, i.e., non-compliant smoking items, which therefore deviate from expectations.

Furthermore, by virtue of the possibility of verifying the compatibility of the type of filter to which the filter segment "S" belongs with that required by the machine, it is also possible to avoid jamming of the machine itself, since certain types of filter may be unsuitable for specific downstream processes, provided to other types of filter.

According to an aspect of the present invention, the method may be further capable of determining the type of filter to which the detected filter segment "S" belongs.

In greater detail, in such case, the method comprises a step of storing, in a memory module, a plurality of reference signals, each representative of a corresponding type of filter.

In such situation, the step of processing the representative signal comprises a sub-step of comparing the signal generated by the detector 20 with the plurality of reference signals and a sub-step of identifying, among the plurality of signals, the reference signal to which the generated signal corresponds or is most similar to. In such situation, the method is capable of detecting the actual type to which the filter segment "S" belongs.

For example, if the detected signal has two pairs of peaks and such trend may be traced back to a filter having at least one hollow tubular end (Figure 3A), the method is capable of identifying such correspondence by providing a user with information regarding the type of filter to which the detected filter segment "S" belongs, i.e., informing the user that the filter segment "S" belongs to the type of filters with at least one hollow tubular end.

In the preferred embodiment, following the step of processing and the sub-step of identifying, the method comprises a step of sending information relating to the type of filter to a user.

Preferably, the step of sending occurs via an interface. Even more preferably, such interface comprises a screen on which the detected filter type may be displayed.

In use, therefore, a filter segment "S" is transversely fed through (or in front of) the inspection module 10 where the detector 20, once the frontal surface of the filter segment "S" passing therein has been detected, generates a signal representative of the structure and/or composition of at least one frontal portion of the filter segment "S".

Subsequently, such signal is compared with each of the signals of the plurality of reference signals stored in the memory module so as to identify, among the plurality of signals, the one to which the generated signal corresponds or is most similar to.

Subsequently, once the filter type to which the generated signal corresponds has been identified, such information is sent to the user so that the latter may be made aware of the type to which the filter segment "S" belongs.

Furthermore, the generated signal is compared with the representative signal of the type of filters required for the machine process so as to verify correspondence or conformity between such types. If the filter segment is of the type expected in use in the machine, the user may see the acceptance signal returned, while if the filter segment is not of the type in use in the machine, the user sees the refusal signal returned and/ or the machine is stopped.

The present invention achieves the intended objects by eliminating the drawbacks emerged from the prior art.

In particular, the method of the invention allows to identify, among all the types of filter, the one to which the detected filter segment corresponds and/or to identify whether or not the type of filter detected matches the one being used in the machine.

## Claims

1. A method for determining the conformity of a type of filter being processed in a machine of the tobacco industry, in particular a combining or filter tip attachment machine, the method comprising the following steps:
- transversely feeding a filter segment (S) through or in front of an inspection module (10), the inspection module (10) comprising a detector (20) which is arranged and/or configured in such a way that, while the filter segment (S) is being fed, the detector (20) faces a frontal surface of the filter segment (S);
- detecting the frontal surface of the filter via the detector (20);
- generating, via the detector (20), a signal representative of the structure and/or the composition of at least one frontal portion of the filter segment (S);
**characterized in that** it comprises a step of processing the representative signal to obtain an information identifying the conformity of the type of filter.

2. The method according to claim 1, comprising a step of storing a plurality of reference signals in a memory module, each reference signal being representative of a corresponding type of filter, and wherein the step of processing the representative signal comprises the following sub-steps:
- comparing the signal generated by the detector (20) with the plurality of reference signals;
- identifying, from among the plurality of signals, the reference signal which the generated signal corresponds to or is most similar to.

3. The method according to claim 1 or 2, comprising, after the step of processing the representative signal, a step of sending the information relating to the type of filter to a user, preferably through an interface.

4. The method according to any one of the preceding claims, wherein the detector (20) comprises an optical fibre sensor, preferably stationary, having a detection axis that is substantially parallel to the longitudinal axis of the filter.

5. The method according to any one of the preceding claims, wherein the method comprises, after the step of processing the representative signal, a step of verifying that the type of filter derived from the step of processing matches a type of filter required for the machine process.

6. The method according to claim 5, wherein the method comprises, after the step of verifying, a step of alternatively sending one of the following signals to a user:
- an acceptance signal representing a positive result of the step of verifying;
- a refusal signal representing a negative result of the step of verifying.

7. The method according to claim 5 or 6, wherein the step of verifying is carried out by comparing the representative signal with a reference signal, specifically a single reference signal, corresponding to the type of filter required for the machine process; the method preferably comprising a step of generating an alert signal and/or a machine stop signal if the step of comparing returns a result indicating a difference or a dissimilarity greater than a predefined threshold between the representative signal and the reference signal.

8. The method according to any one of the preceding claims, wherein the representative signal comprises a time and/or space curve of an intensity of the reading performed by the detector and wherein the step of processing the signal comprises one or more of the following sub-steps:
- identifying the number of peaks or depressions of the curve;
- identifying the amplitude of the peaks or depressions of the curve;
- identifying the position and/or distance between the peaks and/or depressions of the curve;
- identifying a mean value and/or a standard deviation of the curve.

9. The method according to any one of the preceding claims, wherein the step of transversely feeding a filter segment (S) through the inspection module (10) is carried out by moving one of the following through the inspection module (10) or in front of the inspection module (10): a single-length filter segment (S); a multiple-length filter segment (S); a filter-tipped cigarette of single length.

10. The method according to claim 9, wherein the step of transversely feeding a filter segment (S) through the inspection module (10) or in front of the inspection module (10) is carried out at a transfer drum of a combining machine (100) or of a filter tip attachment machine (200).

11. The method according to any one of the preceding claims, wherein the type of filter identifiable is at least one of the following: an acetate filter wrapped in a covering material; a filter of the NWA type; a filter having at least one hollow, tubular end; an irregularly filled filter, specifically PLA or strip material or crimped sheet; a filter with non-filling insert.
